# EUROPEAN PATENT APPLICATION

(11) **EP 1 187 124 A2**
(43) Date of publication of application: **13.03.2002**
(21) Application number: 01302924.4
(22) Date of filing: 28.03.2001
(51) Int. Cl.: G11B 15/18, G11B 15/467, H04N 5/93, H04N 9/87

(54) **Video processing integrated circuit**

(30) Priority: 05.09.2000 KR 2000052371
(71) Applicant: SAMSUNG ELECTRONICS CO., LTD., Suwon-City, Kyungki-do (KR)
(72) Inventor: Kim, Chul-min, 924-1601 Pyuckjeokgol Samsung Apt., Gyeonggi-do (KR)
(74) Representative: Geary, Stuart Lloyd

(57) **Abstract**

The envelope detector (241) of a video processing IC (240) has a variable gain so that its maximum output for normal play and extended play modes is the same.

## Description

The present invention relates to a video signal processing integrated circuit video processing integrated circuit for a video cassette recorder playback circuit, the integrated circuit including a luminance signal path for an FM luminance signal, envelope detector means for detecting the envelope of an FM luminance signal in said luminance signal path and an output terminal at which an FM luminance signal envelope signal is output.

In general, in order to execute auto tracking in a video cassette recorder (VCR), the envelope of the FM video signal is detected during playback and input to a microprocessor. The microprocessor performs auto tracking control using the the input envelope signal.

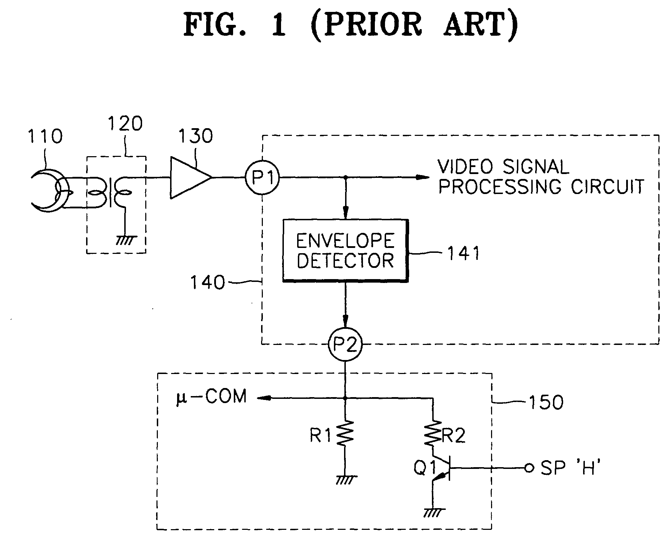

A reproduction circuit of a VCR including a conventional FM video signal envelope detector is shown in Figure 1 and includes a video head 110, a rotary transformer 120, a pre-amplifier 130, an envelope detector 141, included in a video signal processing integrated circuit 140, a level switch 150 having first and second resistors R1, R2 and a transistor Q1.

The frequency modulated (FM) video signal output by the video head 110 during playback is input to the pre-amplifier 130 via the rotary transformer 120. The pre-amplifier amplifies the input signal with a predetermined gain and output it to an input pin P1 of the video signal processing IC 140.

The envelope of the signal input at the input pin P1 of the video signal processing IC 140 is extracted by the envelope detector 141 and is then output at an envelope output pin P2. The envelope level of the FM video signal varies according to the playback mode. That is, during a super long playback (SLP) mode, the width of a video track recorded on a video tape is relatively narrower, compared to a standard playback (SP) mode and consequently the level of the FM video signal, output by the video head 110, is also relatively low during the SLP mode. Thus, in order to execute auto tracking accurately, irrespective of the playback mode, it is necessary to accommodate these mode dependent variations in envelope level.

Conventionally, the signal output at the envelope output pin P2 during the SP mode, is reduced by turning on the transistor Q1, thereby adjusting the envelope level to that for the SLP mode.

Therefore, in order to maintain the envelope level at the same level according to the playback mode, it has been conventionally necessary to add the level switch 150 by adding external circuits to the video signal processing IC, which increases the number of peripheral components of the video signal processing IC, resulting in lowering of the manufacturing efficiency and an increase in manufacturing costs.

An integrated circuit according to the present invention is characterised by a control input for receiving a binary control signal and the envelope detector means being responsive to a signal at said control input to vary its gain. Here the term "gain" refers to the relationship between the amplitude of the FM luminance signal applied to the envelope detector means and the corresponding envelope signal output from the integrated circuit.

Preferably, the envelope detector means is configured such that the envelope signal peak for a higher-speed playback FM luminance signal, e.g. for a standard playback mode, with a first 1-bit binary value applied to said control input is the same as that for a slower-speed playback FM luminance signal, e.g. for an extended playback mode, with a second 1-bit binary value applied to said control input.

Preferably, the envelope detector means comprises an amplitude detector including, a diode and a capacitor connected in series, and a gain control circuit, including a transistor and a resistor connected between the collector of the transistor and the node between the diode and the capacitor, the base of the transistor being connected to be driven from said control input and said output terminal being connected to said node.

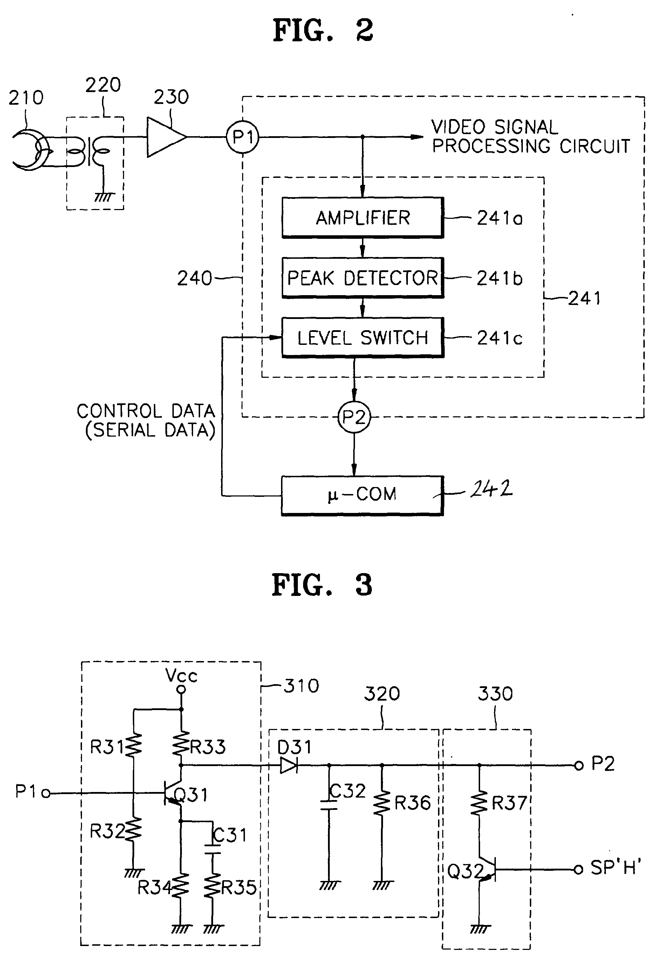

A embodiment of the present invention will now be described, by way of example, with reference to Figures 2 and 3 of the accompanying drawings, in which:
Figure 1 is a schematic diagram illustrating a reproducing circuit of a video cassette recorder having a conventional video signal processing integrated circuit;
Figure 2 is a schematic diagram illustrating a reproducing circuit of a video cassette recorder having a video signal processing integrated circuit according to the present invention; and
Figure 3 is a detailed circuit diagram illustrating an envelope detecting circuit shown in Figure 2.

Referring to Figure 2, the reproduction circuit of a VCR, having a video signal processing IC according to the present invention, includes a video head 210, a rotary transformer 220, a pre-amplifier 230, and a video signal processing IC 240 having an envelope detector 241.

In detail, the envelope detecting circuit 241 includes an amplifier 241a, a peak detector 241b and a level switch 241c.

The detailed circuitry of the respective circuit blocks constituting the envelope detecting circuit 241 is shown in Figure 3.

First, the basic operation of a VCR will now be described. During playback, an FM video signal output by the video head 210 is input to the pre-amplifier 230 via the rotary transformer 220. The pre-amplifier amplifies the input signal with a predetermined gain and output it to an input pin P1 of the video signal processing IC 140.

Then, the video signal processing IC 240 performs a general video signal processing process, such as demodulation of a modulated video signal. Simultaneously, in order to output the envelope waveform of the FM video signal for auto tracking control, to the microprocessor 242, the signal input at the input pin P1 is applied to the envelope detector 241. The microprocessor 242 controls a servo (not shown) in order to maximize the envelope signal.

The operation of the envelope detector 241 will now be described with reference to Figure 3.

The FM luminance signal, input at the input pin P1 of the video signal processing IC 240, is applied to the base of a transistor Q31 in the amplifier 310 and amplified with a gain G (approximately R33/(R34//R35)) and output at the collector of the transistor Q31. The amplified FM video signal is input to the peak detector 320, which comprises a diode D31, a capacitor C32 and a resistor R36, for detection of the envelope of the input signal.

In the case where the playback mode is SP mode, since the base terminal of a transistor Q32, which constitutes a level switch 330, goes "high" by control data input from the microprocessor, the transistor Q32 is turned on so that current flows to a resistor R37. Accordingly, the gain value of the amplifier 310, affected by the resistor R37, is reduced.

In the case where the playback mode is SLP mode, since the base of the transistor Q32 goes "low" by control data input from the microprocessor 242, the transistor Q32 is turned off so that current does not flow through the resistor R37. Accordingly, the gain value of the amplifier 310 is not affected by the resistor R37.

Based on the above-described principle, the difference in the envelope level of an FM video signal between the SP mode and the SLP mode, can be reduced.

In the present invention, all circuit elements constituting the envelope detecting circuit 241, such as the amplifier 241a, the peak detector 241b and the level switch 241c, are incorporated into the video signal processing IC 240 at design time, and the output terminal of the envelope detector 241 of the video signal processing IC 240, is designed to be directly connected to the input terminal of the microprocessor, without any component being added to the output terminal of the envelope detector 241.

In the embodiment of the present invention, the amplifier 241a is installed at the input stage of the peak detector 241b. There may be the case in which the amplifier 241a is installed at the output stage of the peak detector 241b. In the case where the gain of the pre-amplifier 230 is sufficiently large, the amplifier 241a may be removed.

As described above, according to the present invention, the number of components can be reduced by designing all circuit elements constituting an envelope detecting circuit to be incorporated into a video signal processing IC at a time of designing the video signal processing IC, thereby reducing the manufacturing processing cost. Also, since mode control signal lines are saved, the corresponding terminal of the microprocessor can be used for another purpose, thereby increasing the operating efficiency of the microprocessor.

## Claims

1. A video processing integrated circuit for a video cassette recorder playback circuit, the integrated circuit including a luminance signal path for an FM luminance signal, envelope detector means (241) for detecting the envelope of an FM luminance signal in said luminance signal path and an output terminal (P2) at which an FM luminance signal envelope signal is output, **characterised by** a control input for receiving a binary control signal and the envelope detector means (241) being responsive to a signal at said control input to vary its gain.

2. An integrated circuit according to claim 1, wherein the envelope detector means (241) is configured such that the envelope signal peak for a higher-speed playback FM luminance signal with a first 1-bit binary value applied to said control input is the same as that for a slower-speed playback FM luminance signal with a second 1-bit binary value applied to said control input.

3. An integrated circuit according to claim 1 or 2, wherein the envelope detector means (241) comprises an amplitude detector (320) including, a diode (D31) and a capacitor (C32) connected in series, and a gain control circuit (330), including a transistor (Q32) and a resistor (R37) connected between the collector of the transistor (Q32) and the node between the diode (D31) and the capacitor (C32), the base of the transistor (Q32) being connected to be driven from said control input and said output terminal (P2) being connected to said node.

4. A method for designing a video signal processing integrated circuit (IC) having an envelope detector for detecting the envelope of a frequency modulated (FM) video signal, wherein a level variation switching circuit depending on playback mode, having a resistor of the output terminal of an envelope detector of the video signal processing IC, for changing the envelope level according to an execution mode, is incorporated into the video signal processing IC, and ON/OFF switching control of the level variation switching circuit is executed by control data input from a microprocessor.

5. The method according to claim 4, wherein the level variation switching circuit is an element constituting a switching circuit for reducing a difference in the envelope level according to the standard playback (SP)/super long playback (SLP) mode information contained in the control data of the microprocessor.

6. A video signal processing integrated circuit (IC) incorporating an envelope detecting circuit for detecting the envelope level of an FM video signal, wherein the envelope detecting circuit comprises:
a peak detector for receiving the FM video signal and detecting the peak value of the FM video signal; and
a level switch for receiving the output of the peak detector and controlling the envelope level according to the SP/SLP mode information applied from a microprocessor to reduce a difference in the envelope level according to the SP/SLP mode.

7. The video signal processing IC according to claim 6, further comprising an amplifier for amplifying the FM video signal with a predetermined gain, at the input terminal of the peak detector.

8. The video signal processing IC according to claim 6, further comprising an amplifier for amplifying the FM video signal with a predetermined gain, at the output terminal of the peak detector.

9. The video signal processing IC according to claim 6, wherein the level switch has one terminal of a resistance element connected to the output terminal of the peak detector and a switching control element connected to the other terminal of the resistance element, the switching control element being controlled by an SP/SLP control signal.
